# EUROPEAN PATENT SPECIFICATION

(11) **EP 0 926 577 B1**
(45) Date of publication and mention of the grant of the patent: **17.03.2004**
(21) Application number: 98310778.0
(22) Date of filing: 29.12.1998
(51) Int. Cl.: G05B 19/4062

(54) **Controller for electric motor**
Steuerung für elektrischen Motor
Commande pour un moteur électrique

(30) Priority: 26.12.1997 JP 36684197
(43) Date of publication of application: 30.06.1999
(73) Proprietor: Fanuc Ltd, Minamitsuru-gun, Yamanashi 401-0597 (JP)
(72) Inventor: Matsumoto, Kaname, 11-504, Fanuc Manshonharimomi, Minamitsuru-gun, Yamanashi 401-0511 (JP)
(74) Representative: Billington, Lawrence Emlyn

(56) References cited:
- US-A- 4 779 031

## Description

The present invention relates to an electric motor controller, for example a controller for an electric motor driven by a numerical control unit.

An overheat and an offset current of an electric motor are known as factors hindering stable operation of the electric motor.

When an electric motor for driving various machines is driven, the electric motor is heated with heat generated by the driving current. Conventionally, in order to avoid overheat due to the heat generation, a temperature sensor such as a thermostat is mounted on a stator portion of the electric motor or a rotation angle detector for detecting the angle of rotation of the electric motor, to measure surface temperature of the electric motor. The overheat is prevented by making an alarm to interrupt operation of the electric motor when the measured value exceeds a threshold value.

Further in order to prevent the electric motor from being overheated, the electric motor is cooled down by cooling (air blow) with compressed air or by means of a fan.

Furthermore, in order to prevent interruption of the electric motor due to the overheat, various parameters are so changed as to lower operating characteristics of the electric motor on the basis of the temperature of the electric motor.

In a case of an AC servomotor, for example, a current command for each phase is determined in a current loop based on a current command outputted from a velocity loop, an electric angular position of the rotor and a velocity feedback value of the motor. In the current loop for each phase, a control is made to equalize the current command and the feedback value of an actual current. In the current detecting system for determining the feedback value, there may exist an offset. This offset of the current detecting system is an offset component having a relation not to the operation of the electric motor but only to the current detecting system. This current offset generates a pulsating component on the motor torque, which changes in dependence upon the electric angle, and generates one torque ripple with respect to one rotation of the electric angle.

Conventionally, in order to compensate the offset in the current detecting line, in an open state in which no current flows through the motor in an emergency stop when the power is ON, the value detected in the current detecting system is determined as the offset value and the offset value is subtracted from the detected current value and the result is employed as the current feedback value when the current control is carried out.

In the conventional control of the electric motor, an alarm is made, parameters are changed and the offset value is compensated for the unstabilizing components due to the temperature of the electric motor and the offset current in the current detecting system, so that the operation of the electric motor is stabilized.

The inventor of the present invention has found out that the state of a servo-amplifier for supplying a drive current to the electric motor is one of factors hindering the stable operation of the electric motor. The inventor has also found that an unstable operation may be caused in the electric motor when the temperature or the input voltage of the servo-amplifier fluctuates.

In the conventional art, no specific consideration has been taken as to the state of the servo-amplifier, and even if the temperature of the electric motor and the offset current of the current detecting system is compensated, there remains a problem that an unstable operation may remain in the electric motor.

There is disclosed in US-A-4,779,031 an electric motor controller according to the preamble of attached claim 1, but the changed control parameter is merely a range of operational limiting parameters under which the motor can safely operate.

The present invention has an object to solve or at least reduce the problems experienced in electric motor control in the prior art as described hereinbefore, and to provide an electric motor controller capable of improving unstable operation of an electric motor caused by change of state of a driving servo-amplifier.

According to the present invention, there is provided a controller for controlling an electric motor by outputting a command to a servo-amplifier for driving said electric motor, wherein said controller comprises a parameter changing means operable to change a control parameter for controlling said electric motor based on the temperature of the servo-amplifier, so that the controller will output an input command to the servo-amplifier based on the changed control parameter; characterised in that the parameter changing means is operable to change said motor control parameter based on any one or more of said temperature, command voltage and regenerative voltage of the servo-amplifier, with the motor control parameter which is changed comprising any one or more of a velocity override to restrict commanded motor velocity, an acceleration/ deceleration time constant, a current loop gain, and an offset value of a motor feedback current.

The electric motor controller of the invention may be a controller which comprises means for changing a control parameter of a numerical control unit based on the inputted state data of the servo-amplifier. The electric motor is controlled in accordance with a change of state of the servo-amplifier using the control parameter changed by the parameter changing means, to improve unstable operation of the electric motor.

In the present invention, one or more of the temperature of the servo-amplifier, a command voltage to be inputted to the servo-amplifier and a regenerative voltage to be supplied from the electric motor is or are adopted as the state data of the servo-amplifier.

A velocity override for controlling an operation velocity, an acceleration/deceleration time constant for adjusting reactivity of the acceleration or deceleration of the electric motor, a current loop gain for adjusting responsiveness in a current loop, or an offset value of a motor feedback current varying with the temperature change may, for example, be adopted as the parameters of the numerical control unit.

Of the above parameters, the velocity override may depend upon the temperature and the regenerative voltage of the servo-amplifier. The velocity override may have control characteristics in a direction opposite to changing directions of the temperature and the regenerative voltage of the servo-amplifier, and the velocity override may be controlled to decrease (or increase) in response to the increase (or decrease) of the temperature and the regenerative voltage.

The acceleration/deceleration time constant may have control characteristics in the same direction as changing directions of the temperature and the regenerative voltage of the servo-amplifier, and may have control characteristics in a direction opposite to a changing direction of the command voltage for the servo-amplifier. The acceleration/deceleration time constant may be controlled to increase (or decrease) in response to the increase (or decrease) of the temperature and the regenerative voltage, and to decrease (or increase) in response to the increase (or decrease) of the command voltage.

The current loop gain may have control characteristics in a direction opposite to a changing direction of the command voltage of the servo-amplifier, and may be controlled to decrease (or increase) in response to the increase (or decrease) of the command voltage.

Further, the offset value of the motor feedback current may have a temperature dependency. In the motor feedback current, there may arise an offset having a magnitude in a drift in accordance with the temperature of the electric motor. The unstable operation of the electric motor may be improved by setting the offset compensation of the motor feedback current in accordance with the temperature of the electric motor.

According to a preferred embodiment of electric motor controller of the present invention, the parameter changing means in the numerical control unit is provided with storage means for storing the parameter values for the state data of the servo-amplifier so that the parameters are changed by reading out the parameter values from the storage means in response to the inputted state data and using the read parameter values.
FIG. 1 is a schematic construction diagram for explaining an example of the construction of a controller of an electric motor, and is a block diagram of a servo controller to which the invention may be applied;
FIG. 2 is a block diagram for explaining an embodiment of electric motor controller of the invention schematically;
FIG. 3 is a flow chart for explaining the operations to change a velocity override with the temperature of a servo-amplifier by an electric motor controller of the invention;
FIG. 4 is a flow chart for explaining the operations to change an acceleration/deceleration time constant with the temperature of the servo-amplifier by an electric motor controller of the invention;
FIG. 5 is a flow chart for explaining the operations to change the override with a regenerative voltage of the servo-amplifier by an electric motor controller of the invention;
FIG. 6 is a flow chart for explaining the operations to change the acceleration/deceleration time constant with the regenerative voltage of the servo-amplifier by an electric motor controller of the invention;
FIG. 7 is a flow chart for explaining the operations to change the acceleration/deceleration time constant and a current loop gain with a command voltage of the servo-amplifier by an electric motor controller of the invention;
FIG. 8 is a flow chart for explaining the operations to change the acceleration/deceleration time constant and a current loop gain with a command voltage of the servo-amplifier by an electric motor controller of the invention;
FIG. 9 is a flow chart for explaining the operations to change the velocity override and the acceleration/deceleration time constant with the temperature of the servo-amplifier by an electric motor controller of the invention;
FIG. 10 is a diagram for explaining a set value to change the velocity override and the acceleration/deceleration time constant with the temperature of the servo-amplifier by an electric motor controller of the invention;
FIG. 11 is a schematic diagram of a construction for compensating a current offset in accordance with the temperature of the servo-amplifier by an electric motor controller of the invention;
FIG. 12 is a flow chart for compensating a current offset in accordance with the temperature of the servo-amplifier by an electric motor controller of the invention; and
FIG. 13 is an explanatory diagram for compensating a current offset in accordance with the temperature of the servo-amplifier by an electric motor controller of the invention.

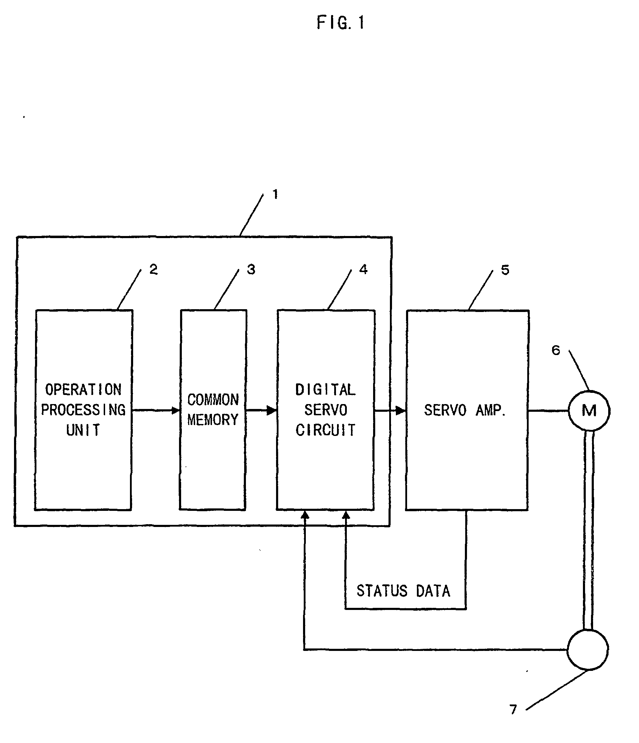

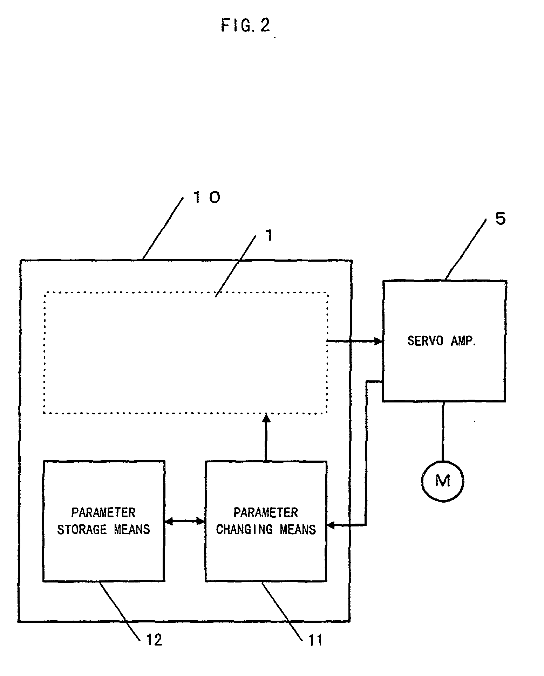

Construction examples of an electric motor controller of the present invention will be described using the schematic construction diagrams of FIGS. 1 and 2.

First, a servomotor control system, to which the invention may be applied, will be schematically described referring to FIG. 1. The construction of this control system is similar to that of the system of the prior art for the digital servo control, and it is schematically shown. In FIG. 1, a numerical control unit (CNC) 1 is constructed to include an operation unit 2 having a computer or the like, a common RAM 3 and a digital servo circuit 4. Incidentally, this digital servo circuit 4 includes a processor (CPU), a ROM and a RAM. Moreover, reference numeral 5 designates a servo-amplifier having a transistor inverter or the like, reference numeral 6 an electric motor (or AC servomotor), and numeral 7 an encoder for generating pulses as the servomotor rotates and a rotor position detector for detecting a rotor phase.

The processor of the digital servo circuit 4 reads a position command or a velocity command, as made by the operation unit 2, through the common RAM 3 to process the position loop and the velocity loop.

An electric motor controller of the invention controls an electric motor in a servomotor control system and is schematically shown in a block diagram in FIG. 2.

The control system shown in FIG. 2 includes the servo-amplifier 5, an electric motor M to be driven by the servo-amplifier 5, and a numerical control unit 10 having parameter changing means 11 and parameter storage means 12 in addition to the conventional numerical control unit 1 as shown in FIG. 1.

The status data of the servo-amplifier 5 is inputted to the parameter changing means 11 and it changes a command value to be outputted to the servo-amplifier 5 in accordance with the status data so that a stable operation of the electric motor M is performed.

Further, the parameter storage means 12 is means for storing the parameter value or corrected value matching the status data of the servo-amplifier 5, and outputs the parameter value or corrected value in accordance with read from the parameter changing means 11. The storage format of the parameter value or corrected value to be stored can be an arbitrary storage format such as a data table or a calculation formula.

The status data of the servo-amplifier include the temperature of the servo-amplifier, a voltage to be fed to the servo-amplifier, and a regenerative voltage to be fed from the electric motor. Further, the parameter of the electric motor to be changed according to the status data can be a velocity override, an acceleration/deceleration time constant, a current loop gain and a current offset. Incidentally, the temperature of the servo-amplifier can be measured by a temperature sensor disposed in the servo-amplifier.

In the construction of FIG. 2, therefore, the electric motor M is driven by feeding back the status data obtained from the servo-amplifier 5 to the parameter changing means 11 of the numerical control unit 10, by changing the parameters according to the status data and by feeding the command based on the changed parameter to the servo-amplifier 5.

The actions of the electric motor may be stabilized by changing the velocity override and the acceleration/deceleration time constant with the temperature of the servo-amplifier 5, by changing the velocity override and the acceleration/deceleration time constant with the regenerative voltage of the servo-amplifier 5, and by changing the acceleration/deceleration time constant and the current loop gain with the command voltage of the servo-amplifier.

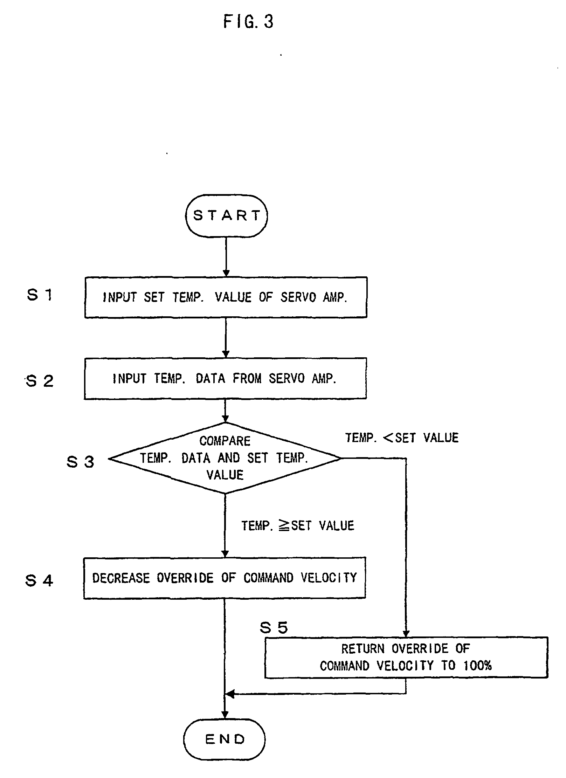

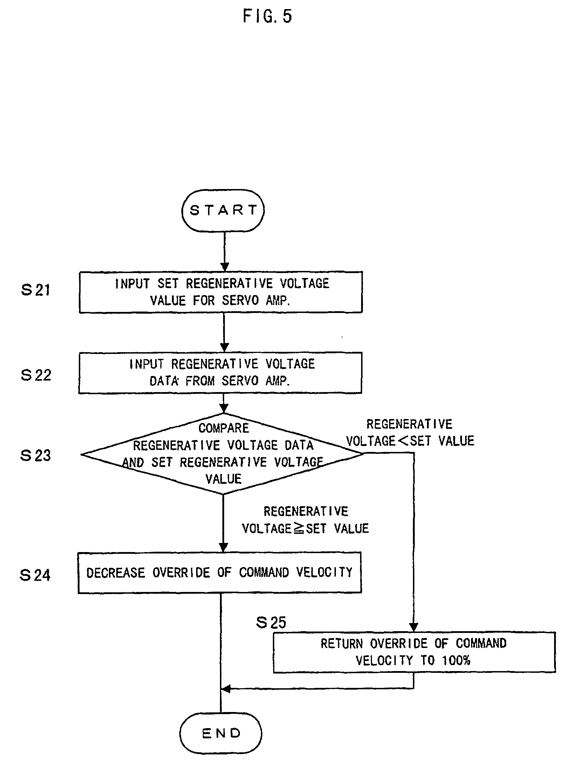

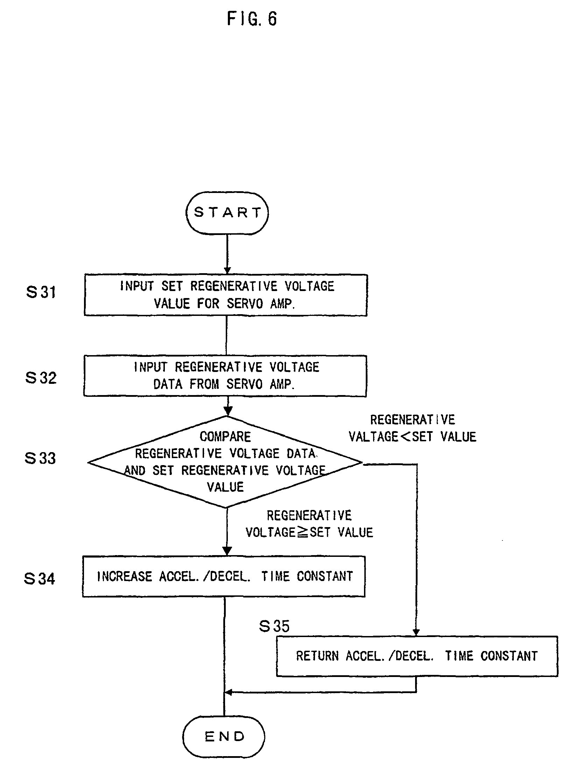

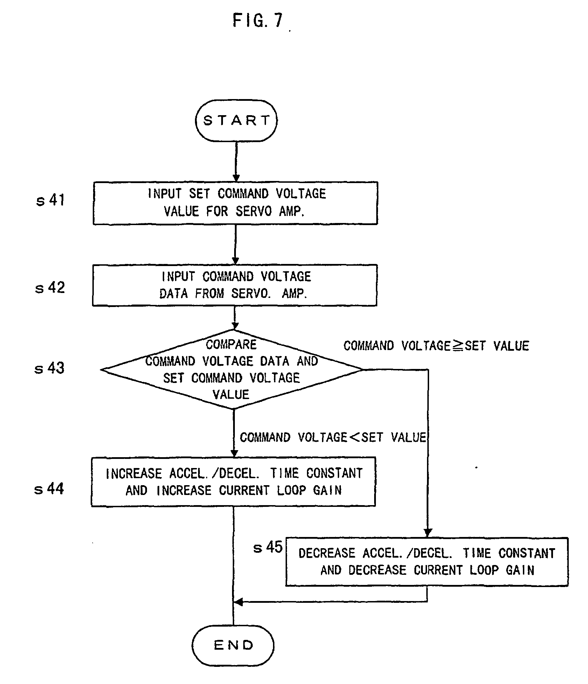

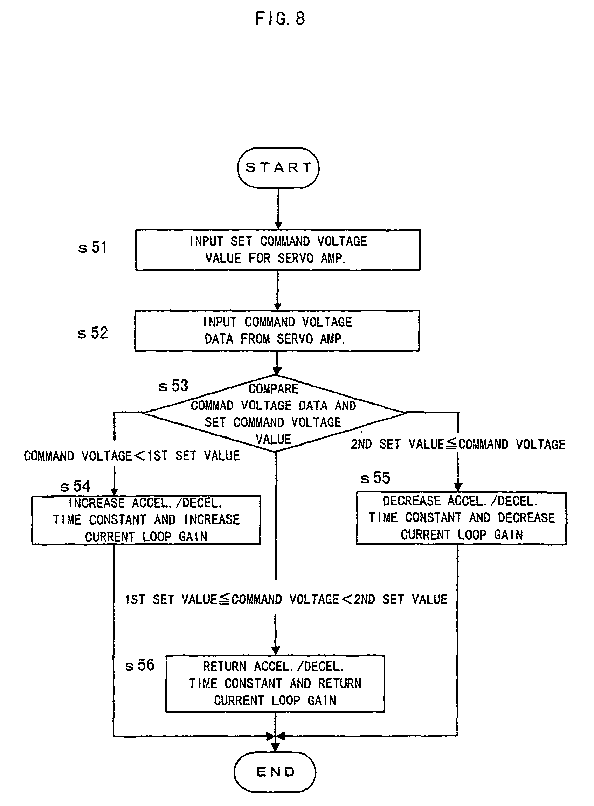

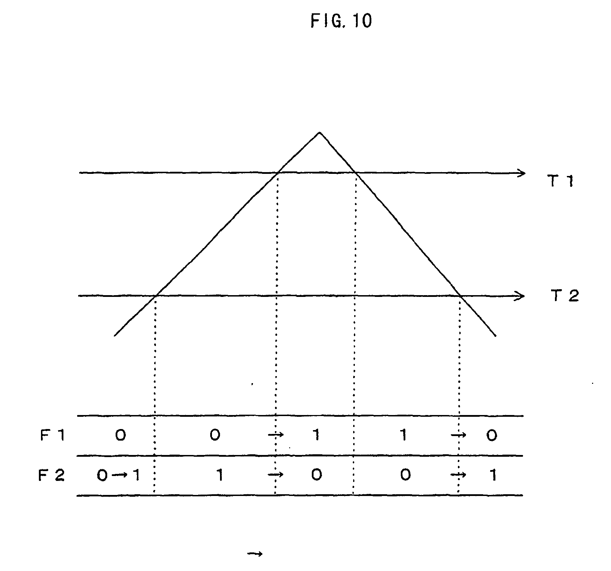

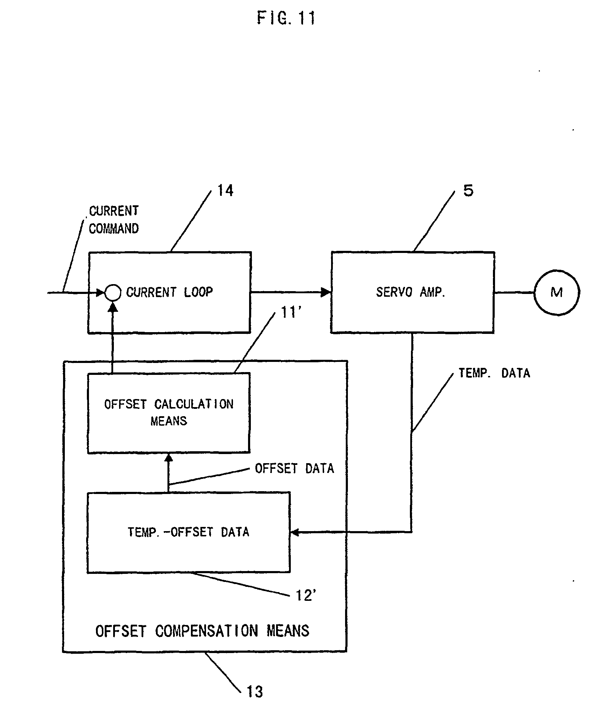

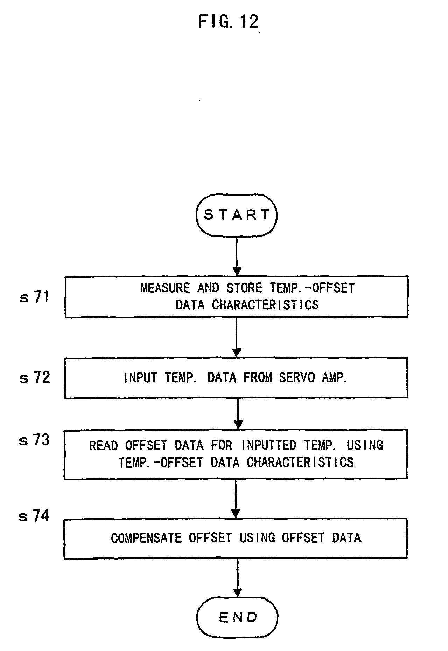

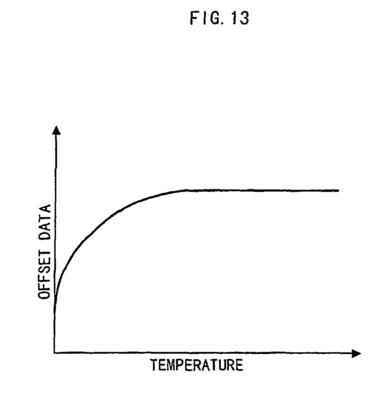

In the following, the operations to change the velocity override and the acceleration/deceleration time constant with the temperature of the servo-amplifier will be described with reference to the flow charts of FIGS. 3,4 and 9 and the explanatory diagram of FIG. 10, the operations to change the velocity override and the acceleration/deceleration time constant with the regenerative voltage of the servo-amplifier will be described with reference to the flow charts of FIGS. 5 and 6, and the operations to change the acceleration/deceleration time constant of the current loop gain with the command voltage of the servo-amplifier will be described with reference to the flow charts of FIGS. 7 and 8. Moreover, the construction and operations to compensate the current offset according to the temperature of the servo-amplifier will be described with reference to the schematic diagram of FIG. 11, the flow chart of FIG. 12 and the explanatory diagram of FIG. 13.

The operations to change the velocity override with the temperature of the servo-amplifier will be described with reference to the flow chart of FIG. 3.

The numerical control unit 10 inputs through the not-shown input means a set temperature value to be used for deciding whether or not the parameters of the velocity override are to be changed, and stores the set temperature value in the parameter storage means 12 (Step S1). The parameter changing means 11 in puts the temperature data of the servo-amplifier 5 from the temperature measuring device such as a temperature sensor mounted in the servo-amplifier 5 (Step S2), and compares it with the set temperature value stored at Step S1 (Step S3).

If this comparison of Step S3 reveals that the temperature of the servo-amplifier is higher than the set value, it is decided that the servo-amplifier is overheated, and the override of the command voltage to be fed to the servo-amplifier 5 is decreased. This decrease can be effected by reading either the override value according to the temperature of the servo-amplifier or the corrected value of the override value from the parameter storage means 12 and by changing the override value with the read value (Step S4).

Further, the override value can be changed by using not the value according to the temperature of the servo-amplifier but a predetermined constant value or a corrected value of the override value.

When the comparison of Step S3 reveals that the temperature of the servo-amplifier is lower than the set value, it is decided that the temperature of the servo-amplifier is normal, and the override of the command velocity to be fed to the servo-amplifier 5 is returned to 100 %. This return can be made in the parameter changing means 11 (Step S5).

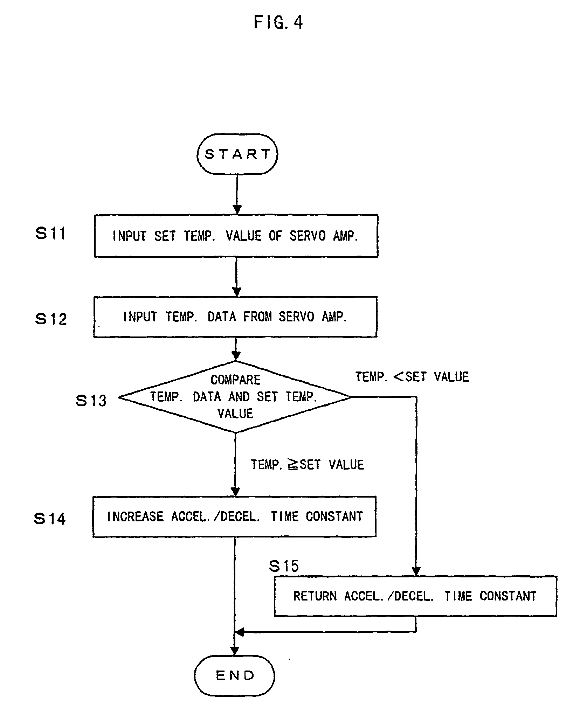

The operations to change the acceleration/deceleration time constant with the temperature of the servo-amplifier will be described with reference to the flow chart of FIG. 4.

The numerical control unit 10 inputs through the not-shown input means the set temperature value to be used for deciding whether or not the parameter of the acceleration/deceleration time constant is to be changed, and stores the set temperature in the parameter storage means 12 (Step S11). The parameter changing means 11 inputs the temperature data of the servo-amplifier 5 from the temperature measuring device such as the temperature sensor mounted in the servo-amplifier 5 (Step S12), and compares the temperature data with the set temperature value stored at Step S1 (Step S13).

When the comparison of Step S13 reveals that the temperature of the servo-amplifier is higher than the set value, it is decided that the servo-amplifier is overheated, and the acceleration/deceleration time constant of the command voltage to be fed to the servo-amplifier 5 is increased. This operation can be performed by reading either the acceleration/deceleration time constant according to the temperature of the servo-amplifier or the corrected value of the acceleration/deceleration time constant from the parameter storage means 12 and by changing the value of the acceleration/deceleration time constant with the read value (Step S14).

Further, the value of the acceleration/deceleration time constant can also be changed by using not the value according to the temperature of the servo-amplifier but either a predetermined constant value or the corrected value of the acceleration/deceleration time constant.

When the comparison of Step S13 reveals that the temperature of the servo-amplifier is lower than the set value, it is decided that the temperature of the servo-amplifier is normal, and the acceleration/deceleration time constant of the command velocity to be fed to the servo-amplifier 5 is returned to the initial value. This operation can be performed in the parameter changing means 11 (Step S15).

The operations to change the velocity override with the regenerative voltage of the servo-amplifier will be described with reference to the flow chart of FIG. 5. Incidentally, these operations are substantially similar to those to change the velocity override with the temperature of the servo-amplifier.

The numerical control unit 10 inputs through the not-shown input means a set regenerative voltage value to be used for deciding whether or not the parameters of the velocity override are to be changed, and stores it in the parameter storage means 12 (Step S21). The parameter changing means 11 inputs the regenerative voltage data generated on the side of the electric motor in the servo-amplifier 5 and returned to the servo-amplifier 5 (Step S22), and compares it with the set regenerative voltage value stored at Step S21 (Step S23).

If this comparison of Step S23 reveals that the regenerative voltage to the servo-amplifier is higher than the set value, it is decided that the servo-amplifier is in an over-voltage state, and the override of the command voltage to be fed to the servo-amplifier 5 is decreased. This decrease can be effected by reading either the override value according to the regenerative voltage of the servo-amplifier or the corrected value of the override value from the parameter storage means 12 and by changing the override value with the read value (Step S24).

Further, independently of the regenerative voltage, the override value can be changed by using a predetermined constant override value or a corrected value.

When the comparison of Step S23 reveals that the regenerative voltage of the servo-amplifier is lower than the set value, it is decided that the voltage of the servo-amplifier is normal or that the command velocity can be fed as it is, and the override of the command velocity to be fed to the servo-amplifier 5 is returned to 100 %. This return can be effected in the parameter changing means 11 (Step S25).

The operations to change the acceleration/deceleration time constant with the regenerative voltage of the servo-amplifier will be described with reference to the flow chart of FIG. 6. Incidentally, these operations are substantially similar to those to change the velocity override with the regenerative voltage of the servo-amplifier.

The numerical control unit 10 inputs through the not-shown input means a set regenerative voltage value to be used for deciding whether or not the parameters of the acceleration/deceleration time constant are to be changed, and stores it in the parameter storage means 12 (Step S31). The parameter changing means 11 inputs the regenerative voltage data generated on the side of the electric motor in the servo-amplifier 5 and returned to the servo-amplifier 5 (Step S32), and compares it with the set regenerative voltage value stored at Step S31 (Step S33).

If this comparison of Step S33 reveals that the regenerative voltage to the servo-amplifier is higher than the set value, it is decided that the servo-amplifier is in an over-voltage state, and the acceleration decelaration time constant of the command velocity to be fed to the servo-amplifier 5 is increased.

This increase can be effected by reading in the parameter changing means 11 either the acceleration/deceleration time constant according to the regenerative voltage or the corrected value of the acceleration/deceleration time constant from the parameter storage means 12 and by changing the acceleration/deceleration time constant with the read value (Step S34).

Further, independently of the regenerative voltage, the acceleration/deceleration time constant can be changed by using a predetermined constant acceleration/deceleration time constant or a corrected value.

When the comparison of Step S33 reveals that the regenerative voltage of the servo-amplifier is lower than the set value, it is decided that the voltage of the servo-amplifier is normal or that the command velocity can be fed as it is, and the acceleration/deceleration time constant of the command velocity to be fed to the servo-amplifier 5 is returned to the initial value. This return can be effected in the parameter changing means 11 (Step S35).

The operations to change the acceleration/deceleration time constant and the current loop gain with the command voltage to the servo-amplifier will be described with reference to the flow chart of FIG. 7.

The numerical control unit 10 inputs through the not-shown input means the set command voltage value to be used for deciding whether or not the parameters of the acceleration/deceleration time constant and the current loop gain are to be changed, and stores it in the parameter storage means 12 (Step S41). The parameter changing means 11 inputs the command voltage data from the servo-amplifier 5 (Step S42), and compares the command voltage data with the set command voltage value stored at Step S41 (Step S43).

When the comparison of Step S43 reveals that the command voltage to the servo-amplifier is lower than the set value, it is decided that, the servo-amplifier is in a low voltage state, and the acceleration/deceleration time constant and the current loop gain of the command velocity to be fed to the servo-amplifier 5 are increased. These operations can be performed in the parameter changing means 11 by reading either the value of the acceleration/deceleration time constant according to the input raw voltage or the corrected value of the acceleration/deceleration time constant, and either the value of current loop gain or the corrected value of the current loop gain from the parameter storage means 12, and by changing the acceleration/deceleration time constant and the current loop gain with the read values (Step S44).

Further, the acceleration/deceleration time constant and the current loop gain can also be changed by using not the value according to the command voltage but either a predetermined constant value or a corrected value of the acceleration/deceleration time constant and either the value of the current loop gain or the corrected value of the current loop gain.

When the comparison of Step S43 reveals that the command voltage is higher than the set value, it is decided that the voltage of the servo-amplifier is in a high voltage state, and the acceleration/deceleration time constant of the command velocity and the current loop gain to be fed to the servo-amplifier 5 are decreased. This decrease can be effected in the parameter changing means 11 (Step S45).

Incidentally, the aforementioned routine is exemplified by changing both the acceleration/deceleration time constant and the voltage loop gain. By changing one of these, however, the operations of the electric motor can also be stabilized.

Another example of the operations to change the acceleration/deceleration time constant and the current loop gain with the command voltage to the servo-amplifier will be described with reference to the flow chart of FIG. 8. In this example, there are provided two set values for the command voltage.

The numerical control unit 10 inputs through the not-shown input means first and second set values of the command voltage to be used for deciding whether or not the parameters of the acceleration/deceleration time constant and the current loop gain are to be changed, and stores them in the parameter storage means 12 and the like. Incidentally, the first and second set values are respectively set to values lower and higher than the command voltage in comparision with the normal state (Step S51). In the servo-amplifier 5, the parameter changing means 11 inputs the command voltage data fed to the servo-amplifier 5 (Step S52), and it is compared with the set command voltage value which is stored at Step S51 (Step S53).

When the comparison of Step S53 reveals that the command voltage to the servo-amplifier is lower than the first set value, it is decided that the servo-amplifier is in a low voltage state, and the acceleration/deceleration time constant of the command velocity and the current loop gain to be fed to the servo-amplifier 5 are increased. This increase can be effected in the parameter changing means 11 by reading the value or the corrected value of the acceleration/deceleration time constant according to the input voltage and the value or the corrected value of the current loop gain from the parameter storage means 12, and by changing the acceleration/deceleration time constant and the current loop gain with the read value (Step S54).

Further, the acceleration/deceleration time constant and the current loop gain can also be changed by using not the value according to the command voltage but a predetermined constant value or the corrected value of the acceleration/deceleration time constant and the value or the corrected value of the current loop gain.

When the comparison of Step S53 reveals that the command voltage is higher than the second set value, it is decided that the voltage of the servo-amplifier is in a high voltage state, the acceleration/deceleration time constant of the command velocity and the current loop gain to be fed to the servo-amplifier 5 are decreased. This decrease can be effected in the parameter changing means 11 (Step S55).

Further, when the comparison of Step S53 reveals that the command voltage is between the first set value and the second set value, it is decided that the voltage of the servo-amplifier is in the normal state, and the acceleration/deceleration time constant of the command velocity and the current loop gain to be fed to the servo-amplifier 5 are returned to the initial steady values. This return can be effected in the parameter changing means 11 (Step S56).

Incidentally, the aforementioned routine is exemplified by changing both the acceleration/deceleration time constant and the voltage loop gain. By changing one of these, however, the operations of the electric motor can also be stabilized.

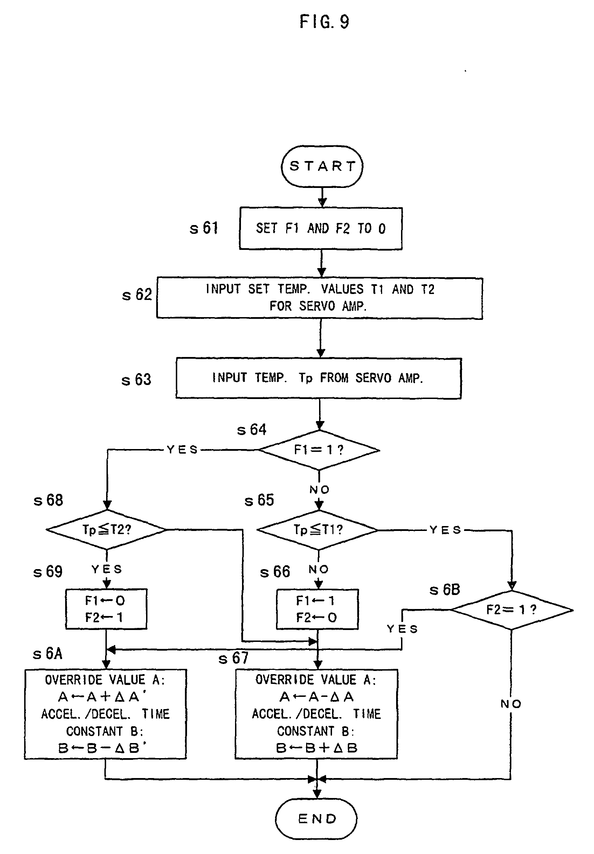

FIG. 9 is a flow chart for explaining in more detail the operations to change at least one of the velocity override and the acceleration/deceleration time constant with the temperature of the servo-amplifier, and FIG. 10 is an explanatory diagram for the flow chart.

In the flow chart of FIG. 9, flags F1 and F2 to be used for this routine are initially set to "0" (Step S61). The numerical control unit 10 inputs through the not-shown input means a first set value T1 and a second set value T2 of the temperature of the servo-amplifier to be used for deciding whether or not the parameters of the override value of the velocity command and the acceleration/deceleration time constant are to be changed, and stores them in the parameter storage means 12. Incidentally, the first and second set temperature values T1 and T2 are respectively set at values higher and lower than the temperature in comparison with the normal state (at Step S62). The parameter changing means 11 inputs a temperature Tp of the servo-amplifier 5 from the temperature measuring means such as a temperature sensor mounted in the servo-amplifier 5 (Step S 63).

Next, it is decided whether or not the flag F1 is set at "1" (Step S64). Incidentally, this flag F1 and the flag F2 have been initially set to "0" when the power is ON (Step S61). When the flag F1 is not at "1", the temperature Tp of the servo-amplifier is compared with the first set value T1 which is set as may cause the servo-amplifier to overheat. When the temperature Tp is not higher than the first set value T1, it is decided whether or not the flag F2 (which has also been initially set to "0", as described above) is at "1" (Step S6B). When this answer is NO, this routine is ended. In the subsequent routine, so long as the temperature Tp determined at Step S63 is not higher than the first set value T1, the operations of Steps S61 to S65 and Step S6B are executed.

When the motor temperature rises so that the temperature Tp of Step S63 exceeds the first set value T1, the routine advances from Step S65 to Step S66, at which the flag F1 is set to "1" and the flag F2 is set to "0" to adjust an override value A and an acceleration/deceleration time constant B. When there is selected a method of adjusting the rising temperature of the servo-amplifier with the override value A, this override value A is decreased by a set value ΔA. Further, when there is selected a method of adjusting the rising temperature of the servo-amplifier with the acceleration/deceleration time constant B, this acceleration/deceleration time constant B is increased by a set value ΔB (Step S67). Incidentally, these parameters (i.e., the override value A and the acceleration/deceleration time constant B) are held at the values which are either initially set at the operation starting time before the adjustment or set with the operation program.

The value of the velocity command to be fed to the servo-amplifier is decreased when the override value A is decreased, and the current to flow through the motor at the acceleration/deceleration time of the motor is decreased when the acceleration/deceleration time constant B is increased.

By decreasing the override value A and by increasing the acceleration/deceleration time constant B, the current to flow through the servo-amplifier is reduced, and the temperature of the servo-amplifier is lowered.

Thus, at Step S67, the parameters of the override value and the acceleration/deceleration time constant are adjusted to lower the servo-amplifier temperature. In the next routine, the flag F1 is set at "1" so that the routine advances from Step S64 to Step S68, at which it is decided whether or not the servo-amplifier temperature Tp of Step S63 is lower than the second set value T2. As described above, the second set value T2 is set to a temperature lower than the first set value T1 (i.e., T1 > T2) and is a set value becoming a reference for switching the parameters from the state, in which the servo-amplifier temperature is adjusted in the decreasing direction, to the state in which the same is adjusted in the increasing direction.

When it is decided at Step S68 that the servo-amplifier temperature Tp is not equal to or lower than the second set value T2, the routine advances to Step S67, at which the parameters are adjusted in the direction to lower the servo-amplifier temperature, and is then ended.

At and after the subsequent routine, so long as the servo-amplifier temperature Tp of Step S63 is higher than the second set value T2, the operations of Steps S61 to S64, Step S68 and Step S67 are performed, and the parameters are sequentially changed in a direction to lower the servo-amplifier temperature at Step S67.

When the parameters are changed in the direction to lower the servo-amplifier temperature so that the servo-amplifier temperature Tp becomes lower than the second set value T2, the routine skips from Step S68 to Step S69, at which the flag F1 is set to "0" and the flag F2 is set to "1" so that the parameters are adjusted in the direction to increase the servo-amplifier temperature (Step S6A).

This routine is ended by effecting at least one of the selected adjustments to increase the override value A by a set amount ΔA' and to decrease the acceleration/deceleration time constant B by a set amount ΔB'. Incidentally, the set amounts of the individual parameters to be adjusted may be equal for the cases in which the motor temperature are decreased and increased. That is, it may be ΔA = ΔA' and ΔB = ΔB'.

From the subsequent routine, the flag F1 is set at "0" whereas the flag F2 is set at "1", and the routine advances to Steps S61 to S65, at which it is decided whether or not the servo-amplifier temperature Tp is equal to or lower than the first set value T1. If this answer is YES, the routine advances to Step S6B, at which it is decided whether or not the flag F2 is at "1". Since the flag F2 is set at "1" at this time, the routine advances to Step S6A, at which the parameters are adjusted in the direction to increase the servo-amplifier temperature.

The operations of Steps S61 to S65, Step S6B and Step S6A are executed in every routines in the direction to increase the servo-amplifier temperature gradually. As a result, the servo-amplifier temperature Tp rises. When this temperature Tp exceeds the first set value T1, the routine advances from Step S65 to Step S66, at which the flag F1 is set to "1" whereas the flag F2 is set to "0", and the parameters are adjusted in the direction to decrease the servo-amplifier temperature (Step S67).

And from the subsequent routine, the flag F1 is set at "1", and the operations of the Steps S61 to S64, Step S68 and Step S67 are executed in every routines to adjust the parameters gradually in the direction to decrease the servo-amplifier temperature. As a result, the servo-amplifier temperature lowers. When this temperature Tp becomes equal to or lower than the second set value T2, the flag F1 is set to "0" whereas the flag F2 is set to "1", and the parameters are adjusted in the direction to increase the motor temperature.

From the subsequent routine, the flag F1 is set at "0" whereas the flag F2 is set at "1", and the operations of Steps S61 to S65, Step S6B and Step S6A are executed to effect adjustments in the direction to increase the motor temperature repeatedly thereby to change the individual parameters in the direction to increase the servo-amplifier temperature gradually.

When the operations are thus executed so that the servo-amplifier temperature Tp exceeds the first set value T1, the parameters are sequentially adjusted in the direction to decrease the servo-amplifier temperature (either by decreasing the override value A sequentially by ΔA or by increasing the acceleration/deceleration time constant B sequentially by ΔB). When the servo-amplifier temperature Tp becomes equal to or lower than the second set value T2, the parameters are sequentially adjusted in the direction to increase the servo-amplifier temperature, on the contrary. As a result, the parameter adjustments are effected to hold the servo-amplifier temperature Tp between the first and second set values T1 and T2 so that the operational instability of the electric motor as might otherwise be caused by the rise in the servo-amplifier temperature can be prevented.

When the numerical control unit is equipped with a plurality of electric motors and servo-amplifiers, the aforementioned operations can be performed either for one electric motor having the servo-amplifier of the highest temperature-change or for all the servo-amplifiers.

When the operations are to be performed for all the servo-amplifiers, the individual servo-amplifiers are subjected to the operations of Steps S61 to S63. When it is decided at Step S64 that the flag is at "0", it is decided whether or not the temperature Tp of all the servo-amplifiers is equal to or less than the first set value T1 which is set for the individual servo-amplifiers. When all the servo-amplifiers are equal to or lower than the first set value T1, the routine advances to Step S6B. When any of the servo-amplifiers exceeds the first set value T1, the routine advances to Step S66.

Further, when the decision of Step S68 decides that the temperature Tp of all the servo-amplifiers is equal to or lower than the second set value T2 which is set for each of the servo-amplifiers, the routine advances to Step S69. When the temperature Tp of any of the servo-amplifiers is not equal to or lower than the second set value T2, the routine advances to Step S67.

Further, in the foregoing example, the parameters (i.e., the override value A and the acceleration/deceleration time constant B) are left at their initially set values till the servo-amplifier temperature Tp exceeds the first set value T1. However, also in this meanwhile, the parameters can be adjusted.

In this case, the operations of the flag F2 and Step S6B are unnecessary, and the operations of Step S66 and Step S69 are to set the flag F1 to "1" or "0". And, when the answer of Step S65 is "YES", the routine advances to Step S6A.

When the servo-amplifier temperature Tp is equal to or lower than the first set value T1, the routine advances to Step S6A, at which the parameters are adjusted in the direction to increase the motor temperature. When the servo-amplifier temperature Tp exceeds the first set value T1, the routine advances to Step S66, at which the flag F1 is set to "1", and the parameters are adjusted in the direction to decrease the servo-amplifier temperature. The parameters are adjusted in the direction to decrease the servo-amplifier temperature in every routines till the servo-amplifier temperature Tp becomes equal to or lower than the second set value T2 (Steps S61 to S64, Step S68 and Step S67). When the servo-amplifier temperature Tp becomes equal to or lower than the second set value T2, the flag F1 is set to "0", and the parameters are adjusted in the direction to increase the servo-amplifier temperature till the servo-amplifier temperature Tp reaches the first set value T1. From now on, these operations are repeated.

Further, in the foregoing example, the parameters for adjusting the temperature of the servo-amplifier are exemplified by the override value and the acceleration/deceleration time constant. However, the controllable factors relating to the temperature rise of the servo-amplifier, such as the maximum velocity or the operation stopping time can be likewise applied.

In one embodiment of electric motor controller of the invention, FIG. 11 is a schematic diagram for explaining a construction for compensating the current offset in accordance with the temperature of the servo-amplifier.

In FIG. 11, the servo-amplifier 5 drives the electric motor M on the basis of a command coming from a current loop 14 which belongs to the not-shown numerical control unit.

Generally in the current feedback to be used during the current control, the feedback data include not only the feedback current of the motor but also the offset data of an electronic device such as an A/D converter or an insulating amplifier. These offset data cause irregular rotations of the motor.

The electric motor controller is equipped in the numerical control unit with offset compensation means 13 for compensating the offset current. This offset compensation means 13 includes temperature-offset data storage means 12' for storing the temperature-offset data, and offset calculation means 11' for determining an offset value on the basis of the offset data obtained from the temperature-offset data storage means 12'. The offset compensation means 13 performs the offset compensation with the temperature data coming from the servo-amplifier 5.

FIG. 12 is a flow chart for explaining the operations of the offset compensation.

The current offset data are obtained against the temperature of the servo-amplifier, as illustrated in FIG. 13. This relation illustrates the determination of the current offset data from the temperature of the servo-amplifier. Therefore, the characteristics between the servo-amplifier temperature and the current offset data are beforehand measured and stored in the temperature-offset data storage means 12'. Incidentally, these characteristics may be stored in an arbitrary storage format such as a data table or a calculation formula (Step S71).

The temperature data are determined from the servo-amplifier 5 and are stored in the temperature-offset data storage means 12' (Step S72), and the offset data corresponding to the temperature data are read (Step S73).

The offset compensation means 13 compensates the current offset by calculating the offset value using the read offset data and by eliminating the calculated value from the feedback current of the current loop (Step S74).

According to this current offset compensation, the offset data can be determined on real time without reducing the motor feedback current to 0, so that the offset compensation of the feedback current can be effected without any time delay.

Incidentally, in the construction described above, the data of the servo-amplifier are monitored, and a malfunction is decided when the monitored value exceeds a preset value, so that a warning can be issued by feeding an abnormal signal or the like to the numerical control unit.

As has been described hereinbefore, it is possible to improve the unstable operations of an electric motor, which might otherwise be caused by the change in the state of the servo-amplifier. Moreover, the velocity override, the acceleration/deceleration time constant, the current loop gain and the current offset can be adjusted by measuring the temperature, the command voltage, the regenerative voltage and the like of the servo-amplifier.

## Claims

1. A controller (10) for controlling an electric motor (M) by outputting a command to a servo-amplifier (5) for driving said electric motor (M), wherein said controller (10) comprises a parameter changing means (11) operable to change a control parameter for controlling said electric motor (M) based on the temperature of the servo-amplifier (5), so that the controller (10) will output an input command to the servo-amplifier (5) based on the changed control parameter;
**characterised in that** the parameter changing means (11) is operable to change said motor control parameter based on any one or more of said temperature, command voltage and regenerative voltage of the servo-amplifier (5), with the motor control parameter which is changed comprising any one or more of a velocity override to restrict commanded motor velocity, an acceleration/deceleration time constant, a current loop gain, and an offset value of a motor feedback current.

2. A controller (10) according to claim 1, wherein the parameter changing means (11) is operable to change the motor control parameter velocity override, based on temperature of the servo-amplifier (5).

3. A controller (10) according to claim 1, wherein the parameter changing means (11) is operable to change the motor control parameter acceleration/deceleration time constant, based on temperature of the servo-amplifier (5).

4. A controller (10) according to claim 1, wherein the parameter changing means (11) is operable to change the motor control parameter velocity override, based on regenerative voltage of the servo-amplifier (5).

5. A controller (10) according to claim 1, wherein the parameter changing means (11) is operable to change the motor control parameter acceleration/deceleration time constant, based on regenerative voltage of the servo-amplifier (5).

6. A controller (10) according to claim 1, wherein the parameter changing means (11) is operable to change the motor control parameter acceleration/deceleration time constant, based on command voltage of the servo-amplifier (5).

7. A controller (10) according to claim 1, wherein the parameter changing means (11) is operable to change the motor control parameters acceleration/deceleration time constant and current loop gain, based on command voltage of the servo-amplifier (5).

8. A controller (10) according to claim 1, wherein the parameter changing means (11) is operable to change the motor control parameters velocity override and acceleration/deceleration time constant, based on temperature of the servo-amplifier (5).

9. A controller (10) according to claim 1, wherein the parameter changing means (11) is operable to change the motor control parameter offset value of motor feedback current, based on temperature of the servo-amplifier (5).

## Patentansprüche

1. Regelungsvorrichtung (10) zur Regelung eines Elektromotors (M) durch Ausgeben eines Befehla an einen Servoverstärker (5) zum Treiben des Elektromotors (M), wobei die Regelungsvorrichtung (10) ein Parameteränderungsmittel (11) umfasst, das betriebsfähig ist, einen Regelungsparameter zur Regelung des Elektromotors (M) auf der Grundlage der Temperatur des Servo-Verstärkers (5) derart zu ändern, dass die Regelungsvorrichtung (10) einen Eingabebefehl auf der Grundlage des geänderten Regelungsparameters an den Servoverstärker (5) ausgeben wird,
**dadurch gekennzeichnet, dass** das Parameteränderungsmittel (11) betriebsfähig ist, den Motor-Regelungsparameter auf der Grundlage irgendeiner oder mehrerer der Größen Temperatur, Befehlsspannung und Rückkopplungsspannung des Servo-Verstärkers (5) zu ändern, wobei der Motor-Regelungsparameter, der geändert wird, irgendeine oder mehrere der Größen Geschwindigkeitsübersteuerungs-Beschränkungsmaß zum Beschränken einer befohlenen Motor-Geschwindigkeit, Beschleunigungs/Verzögerungs-Zeitkonstante, Stromregelungsschleifen-Übertragungsfaktor und Versatzwert eines Motor-Rückkopplungsstroms umfasst.

2. Regelungsvorrichtung (10) nach Anspruch 1, wobei das Parameteränderungsmittel (11) betriebsfähig ist, die Motor-Regelungsparameter-Geschwindigkeitsübersteuerung auf der Grundlage der Temperatur des Servo-Verstärkers (5) zu ändern.

3. Regelungsvorrichtung (10) nach Anspruch 1, wobei das Parameteränderungsmittel (11) betriebsfähig ist, die Motor-Regelungsparameter-Beschleunigungs/Verzögerungs-Zeitkonstante auf der Grundlage der Temperatur des Servo-Verstärkers (5) zu ändern.

4. Regelungsvorrichtung (10) nach Anspruch 1, wobei das Parameteränderungsmittel (11) betriebsfähig ist, das Motor-Regelungsparameter-Geschwindigkeitsübersteuerungsmaß auf der Grundlage der Rückkopplungsspannung des Servo-Verstärkers (5) zu ändern.

5. Regelungsvorrichtung (10) nach Anspruch 1, wobei das Parameteränderungsmittel (11) betriebsfähig ist, die Motor-Regelungsparameter-Beschleunigungs/Verzögerungs-Zeitkonstante auf der Grundlage der Rückkopplungsspannung des Servo-Verstärkers (5) zu ändern.

6. Regelungsvorrichtung (10) nach Anspruch 1, wobei das Parameteränderungsmittel (11) betriebsfähig ist, die Motor-Regelungsparameter-Beschleunigungs/Verzögerungs-Zeitkonstante auf der Grundlage der Befehlsspannung des Servo-Verstärkers (5) zu ändern.

7. Regelungsvorrichtung (10) nach Anspruch 1, wobei das Parameteränderungsmittel (11) betriebsfähig ist, die Motor-Regelungsparameter-Beschleunigungs/Verzögerungs-Zeitkonstante und den Stromregelungsschleifen-Übertragungsfaktor auf der Grundlage der Befehlsspannung des Servo-Verstärkers (5) zu ändern.

8. Regelungsvorrichtung (10) nach Anspruch 1, wobei das Parameteränderungsmittel (11) betriebsfähig ist, das Motor-Regelungsparameter-Geschwindigkeitsübersteuerungsmaß und die Beschleunigungs/Verzögerungs-Zeitkonstante auf der Grundlage der Temperatur des Servo-Verstärkers (5) zu ändern.

9. Regelungsvorrichtung (10) nach Anspruch 1, wobei das Parameteränderungsmittel (11) betriebsfähig ist, den Motor-Regelungsparameter-Versatzwert des Motor-Rückkopplungsstroms auf der Grundlage der Temperatur des Servo-Verstärkers (5) zu ändern.

## Revendications

1. Un dispositif de commande (10) pour commander un moteur électrique (M) en délivrant une instruction à un amplificateur de réglage (5) pour entraîner ledit moteur électrique (M), dans lequel ledit dispositif de commande (10) comprend un moyen de modification de paramètre (11) actionnable pour modifier un paramètre de commande permettant de commander ledit moteur électrique (M) sur la base de la température de l'amplificateur de réglage (5), de sorte que le dispositif de commande (10) délivrera à l'amplificateur de réglage (5) une instruction d'entrée basée sur le paramètre de commande modifié ;
**caractérisé en ce que** le moyen de modification de paramètre (11) est actionnable pour modifier ledit paramètre de commande du moteur sur la base de l'un quelconque ou de plusieurs parmi ladite température, ladite tension d'instruction et ladite tension régénérative de l'amplificateur de réglage (5), le paramètre de commande du moteur qui est modifié comprenant l'un quelconque ou plusieurs parmi un dépassement de vitesse pour limiter la vitesse du moteur auquel a été donnée une instruction, une constante de temps d'accélération/décélération, un gain de boucle de courant, et une valeur décalée d'un courant de contre-réaction du moteur.

2. Un dispositif de commande (10) selon la revendication 1, dans lequel le moyen de modification de paramètre (11) est actionnable pour modifier le dépassement de vitesse formant paramètre de commande du moteur, sur la base de la température de l'amplificateur de réglage (5).

3. Un dispositif de commande (10) selon la revendication 1, dans lequel le moyen de modification de paramètre (11) est actionnable pour modifier la constante de temps d'accélération/décélération formant paramètre de commande du moteur, sur la base de la température de l'amplificateur de réglage (5).

4. Un dispositif de commande (10) selon la revendication 1, dans lequel le moyen de modification de paramètre (11) est actionnable pour modifier le dépassement de vitesse formant paramètre de commande du moteur, sur la base de la tension régénérative de l'amplificateur de réglage (5).

5. Un dispositif de commande (10) selon la revendication 1, dans lequel le moyen de modification de paramètre (11) est actionnable pour modifier la constante de temps d'accélération/décélération formant paramètre de commande du moteur, sur la base de la tension régénérative de l'amplificateur de réglage (5).

6. Un dispositif de commande (10) selon la revendication 1, dans lequel le moyen de modification de paramètre (11) est actionnable pour modifier la constante de temps d'accélération/décélération formant paramètre de commande du moteur, sur la base de la tension d'instruction de l'amplificateur de réglage (5).

7. Un dispositif de commande (10) selon la revendication 1, dans lequel le moyen de modification de paramètre (11) est actionnable pour modifier la constante de temps d'accélération/décélération et le gain de la boucle de courant formant paramètres de commande du moteur, sur la base de la tension d'instruction de l'amplificateur de réglage (5).

8. Un dispositif de commande (10) selon la revendication 1, dans lequel le moyen de modification de paramètre (11) est actionnable pour modifier le dépassement de vitesse et la constante de temps d'accélération/décélération formant paramètres de commande du moteur, sur la base de la température de l'amplificateur de réglage (5).

9. Un dispositif de commande (10) selon la revendication 1, dans lequel le moyen de modification de paramètre (11) est actionnable pour modifier la valeur de décalage du courant de contre-réaction du moteur formant paramètre de commande du moteur, sur la base de la température de l'amplificateur de réglage (5).
